# EUROPEAN PATENT APPLICATION

(11) **EP 2 547 153 A2**
(43) Date of publication of application: **16.01.2013**
(21) Application number: 12166332.2
(22) Date of filing: 02.05.2012
(51) Int. Cl.: H04W 48/16, G06F 3/00

(54) **Method for establishing a wireless link for a computer**

(30) Priority: 12.07.2011 US 201161506650 P; 12.07.2011 US 201161506647 P; 29.12.2011 TW 100149521
(71) Applicant: Acer Incorporated, New Taipei City 221 (TW)
(72) Inventor: Jiang, Shu-Yu, 221 New Taipei City (TW); Lin, Yung-Sen, 221 New Taipei City (TW)
(74) Representative: Becker Kurig Straus

(57) **Abstract**

Establishing a wireless link for a computer includes executing a basic input output system, using a wireless module built in the computer to scan at least one nearby access point when executing the basic input output system, and linking the wireless module to an access point of the at least one access point. Because the computer can scan nearby access points with the built in wireless module when executing the basic input output system, an access point can be linked by the wireless module before an operating system is initialized.

## Description

### Field of the Invention

The present invention is related to a method for establishing a wireless link for a computer, and more particularly, to a method for efficiently establishing a wireless link for a computer according to the pre-characterizing clause of claim 1.

### Background of the Invention

Wireless communication technologies, such as Wifi (Wireless Fidelity), 3G (third-generation) and bluetooth, are widely used in mobile devices, such as smart phones, personal computers (PCs), tablet PCs and notebook PCs, for allowing users to surf the Internet. Besides, more and more access points (AP) for wirelessly linking to the Internet are being setup throughout cities. Thus, establishing a wireless link between a mobile device and an Internet efficiently has become an important issue.

Before establishing a wireless link between a computer and the Internet, a user must turn on the computer first to execute a basic input output system (BIOS). After executing the BIOS, an operation system (OS) is initialized. After the OS is initialized, the computer can finally be linked to the Internet wirelessly according to inputted instructions, or via an installed software program automatically.

In the aforementioned procedures, linking the computer to the Internet wirelessly can only be implemented after executing the BIOS and initializing the OS. Therefore, the user has to wait for a long time before the computer can be linked to the Internet wirelessly.

### Summary of the Invention

This in mind, the present invention aims at providing a method of performing a recovery operation which prevents a functional storage device from being dropped when the failure of the recovery operation is caused by a temporary device error.

This is achieved by a method for establishing a wireless link for a computer according to claim 1. The dependent claims pertain to corresponding further developments and improvements.

As will be seen more clearly from the detailed description following below, the claimed method for establishing a wireless link for a computer includes executing a basic input output system (BIOS), using a wireless module built in the computer to scan at least one nearby access point when executing the BIOS, and linking the wireless module to an access point of the at least one access point.

### Brief Description of the Drawings

In the following, the invention is further illustrated by way of example, taking reference to the accompanying drawings thereof:
FIG. 1 is a diagram of a computer linked to an Internet in a wireless communication environment according to the present invention;
FIG. 2 is a flowchart showing the computer linked to the Internet through an access point according to a first embodiment of the present invention;
FIG. 3 is a flowchart showing the computer linked to the Internet through an access point according to a second embodiment of the present invention;
FIG. 4 is a flowchart showing the computer linked to the Internet through an access point according to a third embodiment of the present invention; and
FIG. 5 is a flowchart showing the computer linked to the Internet through an access point in according to a fourth embodiment of the present invention.

### Detailed Description

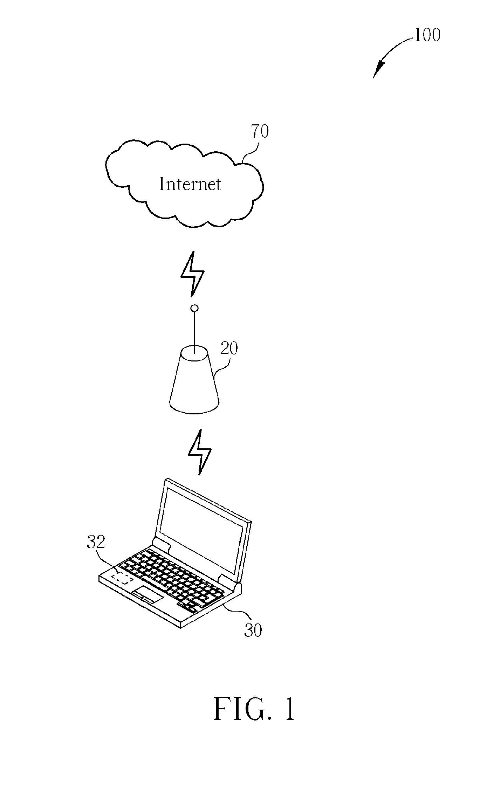

Please refer to FIG. 1. FIG. 1 is a diagram showing a computer 30 linked to an Internet 70 in a wireless communication environment 100 according to the present invention. As depicted in FIG. 1, a wireless module 32 built in the computer 30 is used to scan at least one nearby access point. After an access point 20 is found via scanning, the computer 30 is linked to the Internet 70 through the access point 20. The wireless module 32 can be a Wifi, 3G or bluetooth wireless module. Please notice that each of the access points described above and below may be a wireless module of an electronic device.

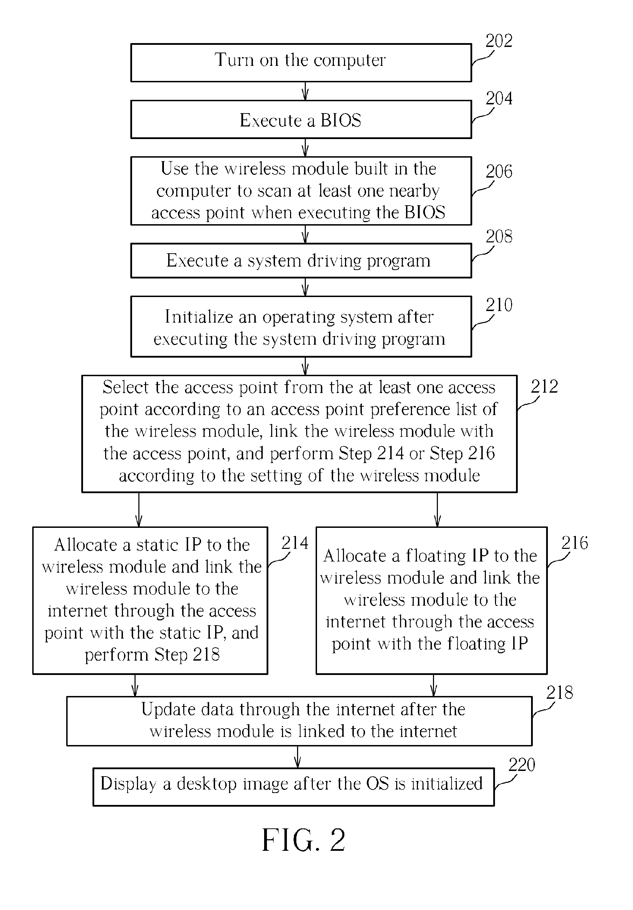

Please refer to FIG. 2. FIG. 2 is a flowchart showing the computer 30 linked to the Internet 70 through the access point 20 according to a first embodiment of the present invention. The flowchart is described as follows:
- Step 202:: turn on the computer 30;
- Step 204:: execute a BIOS;
- Step 206:: use the wireless module 32 built in the computer 30 to scan at least one nearby access point when executing the BIOS;
- Step 208:: execute a system driving program;
- Step 210:: initialize an operating system after executing the system driving program;
- Step 212:: select an access point 20 from the at least one access point according to an access point preference list of the wireless module 32, link the wireless module 32 with the access point 20, and perform Step 214 or Step 216 according to the setting of the wireless module 32;
- Step 214:: allocate a static IP (Internet protocol) to the wireless module 32 and link the wireless module 32 to the Internet 70 through the access point 20 with the static IP, and perform Step 218;
- Step 216:: allocate a floating IP to the wireless module 32 and link the wireless module 32 to the Internet 70 through the access point 20 with the floating IP, and perform Step 218;
- Step 218:: update data through the Internet 70 after the wireless module 32 is linked to the Internet 70;
- Step 220:: display a desktop image after the OS is initialized.

In Steps 202 to 220, the computer 30 may scan nearby access points with the built-in wireless module 32, or the wireless module 32 may scan nearby access points automatically when the computer 30 executes the BIOS. When multiple access points are found, the wireless module 32 will compare each access point with the access point preference list of the wireless module 32 so as to link to a preferred access point 20 wirelessly. The access point preference list is updated according to priority and/or frequency of using the access point 20. Thus the wireless module 32 tends to select a more frequently linked access point to establish a wireless link according to the access point preference list. The wireless module 32 can be allocated a static IP or a floating IP allocated through the dynamic host configuration protocol (DHCP). Thus, in Step 214 or Step 216, the wireless module 32 can be linked to the Internet 70 via the access point 20 with the allocated static IP or floating IP. In Step 218, the computer 30 updates data through the Internet 70. Since the computer 30 has updated data before the desktop image is displayed in Step 220, the user can access the Internet 70 immediately after the desktop image is displayed. That is, the user does not have to spend additional time waiting for the wireless module 32 to search for an access point and link to the Internet 70 after the desktop image is displayed.

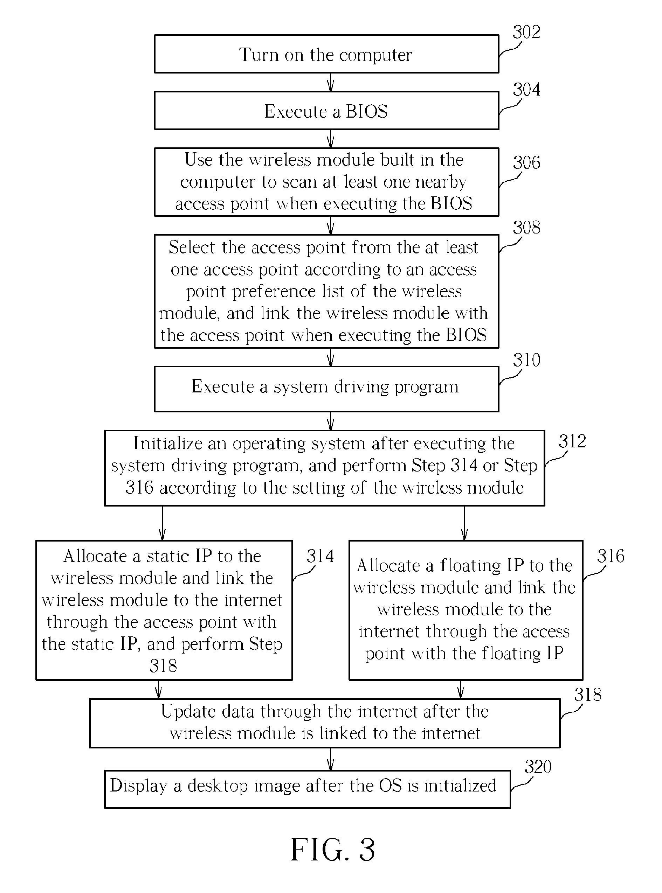

Please refer to FIG. 3. FIG. 3 is a flowchart showing the computer 30 linked to the Internet 70 through the access point 20 according to a second embodiment of the present invention. The flowchart is described as follows:
- Step 302:: turn on the computer 30;
- Step 304:: execute a BIOS;
- Step 306:: use the wireless module 32 built in the computer 30 to scan at least one nearby access point when executing the BIOS;
- Step 308:: select an access point 20 from the at least one access point according to an access point preference list of the wireless module 32, and link the wireless module 32 with the access point 20 when executing the BIOS;
- Step 310:: execute a system driving program;
- Step 312:: initialize an operating system after executing the system driving program, and perform Step 314 or Step 316 according to the setting of the wireless module 32;
- Step 314:: allocate a static (Internet protocol) IP to the wireless module 32 and link the wireless module 32 to the Internet 70 through the access point 20 with the static IP, and perform Step 318;
- Step 316:: allocate a floating IP to the wireless module 32 and link the wireless module 32 to the Internet 70 through the access point 20 with the floating IP, and perform Step 318;
- Step 318:: update data through the Internet 70 after the wireless module 32 is linked to the Internet 70;
- Step 320:: display a desktop image after the OS is initialized.

The difference between the second embodiment and the first embodiment is that in the second embodiment, the wireless module 32 has been linked to the access point 20 in Step 308 when executing the BIOS. In Step 314 or 316, the computer 30 has linked to the Internet 70 via the access point 20. Similarly, through utilizing the method and device provided in the second embodiment, the user can access the Internet 70 immediately after the desktop image is displayed. That is, the user does not have to spend additional time waiting for the wireless module 32 to search for an access point and link to the Internet 70 after the desktop image is displayed.

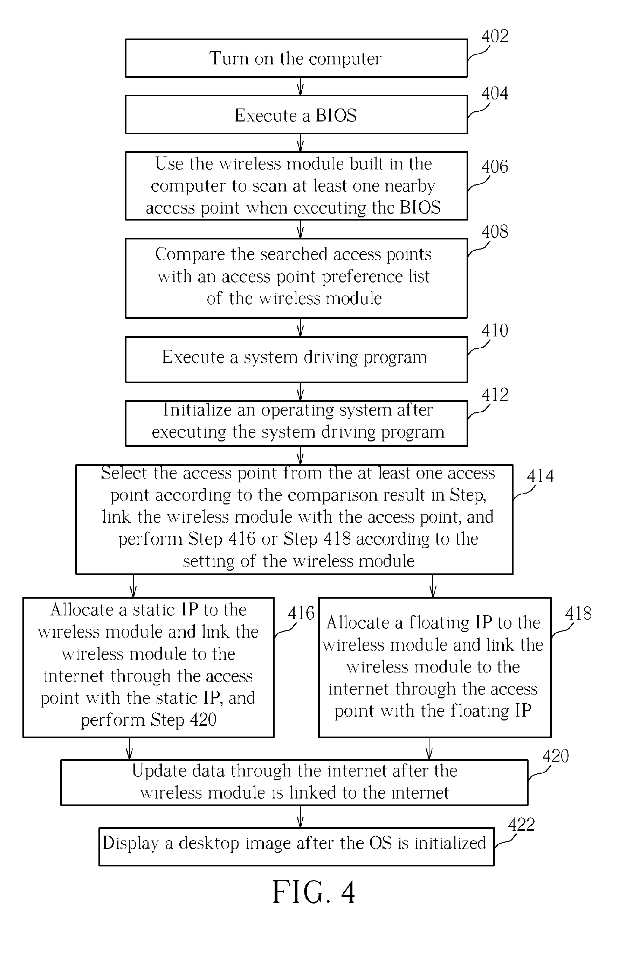

Please refer to FIG. 4. FIG. 4 is a flowchart showing the computer 30 linked to the Internet 70 through the access point 20 according to a third embodiment of the present invention. The flowchart is described as follows:
- Step 402:: turn on the computer 30;
- Step 404:: execute a BIOS;
- Step 406:: use the wireless module 32 built in the computer 30 to scan at least one nearby access point when executing the BIOS;
- Step 408:: compare the searched access points with an access point preference list of the wireless module 32;
- Step 410:: execute a system driving program;
- Step 412:: initialize an operating system after executing the system driving program;
- Step 414:: select an access point 20 from the at least one access point according to the comparison result in Step 408, link the wireless module 32 with the access point 20, and perform Step 416 or Step 418 according to the setting of the wireless module 32;
- Step 416:: allocate a static IP to the wireless module 32 and link the wireless module 32 to the Internet 70 through the access point 20 with the static IP, and perform Step 420;
- Step 418:: allocate a floating IP to the wireless module 32 and link the wireless module 32 to the Internet 70 through the access point 20 with the floating IP, and perform Step 420;
- Step 420:: update data through the Internet 70 after the wireless module 32 is linked to the Internet 70;
- Step 422:: display a desktop image after the OS is initialized.

The difference between the third embodiment and the first embodiment is that in the third embodiment, the access point 20 to be linked to the wireless module 32 is selected after the operating system is initialized. Similarly, through utilizing the method and device provided in the third embodiment, the user can access the Internet 70 immediately after the desktop image is displayed. That is, the user does not have to spend additional time waiting for the wireless module 32 to search for an access point and link to the Internet 70 after the desktop image is displayed.

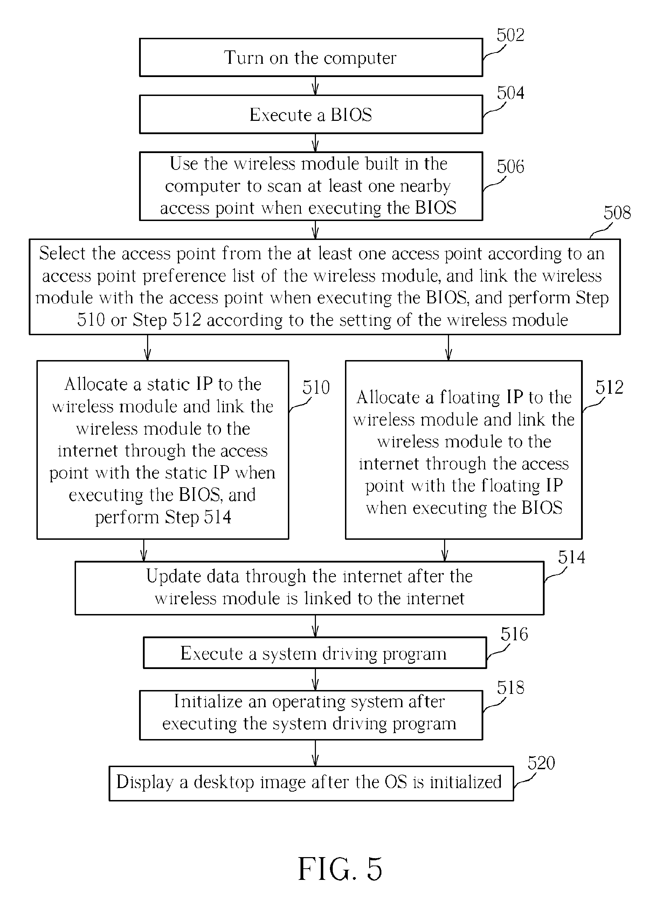

Please refer to FIG. 5. FIG. 5 is a flowchart showing the computer 30 linked to the Internet 70 through the access point 20 according to a fourth embodiment of the present invention. The flowchart is described as follows:
- Step 502:: turn on the computer 30;
- Step 504:: execute a BIOS;
- Step 506:: use the wireless module 32 built in the computer 30 to scan at least one nearby access point when executing the BIOS;
- Step 508:: select an access point 20 from the at least one access point according to an access point preference list of the wireless module 32, and link the wireless module 32 with the access point 20 when executing the BIOS, and perform Step 510 or Step 512 according to the setting of the wireless module 32;
- Step 510:: allocate a static IP to the wireless module 32 and link the wireless module 32 to the Internet 70 through the access point 20 with the static IP when executing the BIOS, and perform Step 514;
- Step 512:: allocate a floating IP to the wireless module 32 and link the wireless module 32 to the Internet 70 through the access point 20 with the floating IP when executing the BIOS, and perform Step 514;
- Step 514:: update data through the Internet 70 after the wireless module 32 is linked to the Internet 70;
- Step 516:: execute a system driving program;
- Step 518:: initialize an operating system after executing the system driving program;
- Step 520:: display a desktop image after the OS is initialized.

The difference between the fourth embodiment and the second embodiment is that in the fourth embodiment, the computer 30 has linked the wireless module 32 to the access point 20 in Step 508 and has linked the wireless module 32 to the Internet 70 in Step 510 or Step 512 when executing the BIOS and before executing the system driving program in order to update data of the computer 30 through the Internet 70. Similarly, through utilizing the method and device provided in the fourth embodiment, the user can access the Internet 70 immediately after the desktop image is displayed. That is, the user does not have to spend additional time waiting for the wireless module 32 to search for an access point and link to the Internet 70 after the desktop image is displayed.

In view of above, through utilizing the method and device provided in the present invention, the computer 30 can be linked to the Internet 70 via the access point 20 before the OS is initialized. Therefore, after the OS is initialized, the user can access the Internet 70 immediately without spending additional time waiting for the wireless module 32 to search for an access point.

## Claims

1. A method for establishing a wireless link for a computer comprising:
executing a basic input output system; **characterized by**:
using a wireless module built in the computer to scan at least one nearby access point when executing the basic input output system; and
linking the wireless module to an access point among the at least one access point.

2. The method of claim 1 , **characterized in that** the access point is a wireless module of an electronic device.

3. The method of claim 1 , further **characterized by**:
selecting the access point among the at least one access point according to an access point preference list.

4. The method of claim 3, further **characterized by**:
updating the access point preference list according to a priority and/or a frequency of using the at least one access point.

5. The method of claim 3, **characterized in that** selecting the access point is performed when executing the basic input output system.

6. The method of claim 1, **characterized in that** linking the wireless module to the access point is performed when executing the basic input output system.

7. The method of claim 1 , further **characterized by**:
executing a system driving program.

8. The method of claim 7, further **characterized by**:
initializing an operating system after executing the system driving program.

9. The method of claim 8, further **characterized by**:
selecting the access point among the at least one access point according to an access point preference list when initializing the operating system.

10. The method of claim 9, further **characterized by**:
updating the access point preference list according to a priority and/or a frequency of using the at least one access point.

11. The method of claim 8, **characterized in that** linking the wireless module to the access point is performed when initializing the operating system.

12. The method of claim 8, further **characterized by**:
allocating a static Internet protocol to the wireless module when initializing the operating system;
linking the wireless module to an Internet through the access point according to the static Internet protocol when initializing the operating system; and
the computer updating data through the Internet when initializing the operating system.

13. The method of claim 1 , further **characterized by**:
allocating a static Internet protocol to the wireless module when executing the basic input output system.

14. The method of claim 13, further **characterized by**:
linking the wireless module to an Internet through the access point according to the static IP when executing the basic input output system.

15. The method of claim 14, further **characterized by**:
the computer updating data through the Internet when executing the basic input output system.

16. The method of claim 8, further **characterized by**:
allocating a floating Internet protocol to the wireless module when initializing the operating system;
linking the wireless module to an Internet through the access point according to the floating Internet protocol when initializing the operating system; and
the computer updating data through the Internet when initializing the operating system.

17. The method of claim 1 , further **characterized by**:
allocating a floating Internet protocol to the wireless module when executing the basic input output system.

18. The method of claim 17, further **characterized by**:
linking the wireless module to an Internet through the access point according to the floating Internet protocol when executing the basic input output system.

19. The method of claim 18, further **characterized by**:
the computer updating data through the Internet when executing the basic input output system.

20. The method of claim 1 , **characterized in that** the wireless module is a Wireless Fidelity, a third-generation or a bluetooth wireless module.
